# EUROPEAN PATENT SPECIFICATION

(11) **EP 1 438 894 B1**
(45) Date of publication and mention of the grant of the patent: **17.05.2006**
(21) Application number: 04000433.5
(22) Date of filing: 12.01.2004
(51) Int. Cl.: A01K 39/014, A01K 31/06, A01K 1/035

(54) **Waste-reducing food dispenser, particularly for cages for small animals**
Abfallverminderender Fütterer, insbesondere für Haustierkäfige
Mangeoire permettant la réduction de déchets, particulièrement pour des cages pour animaux domestiques

(30) Priority: 16.01.2003 IT PD20030006
(43) Date of publication of application: 21.07.2004
(73) Proprietor: Marchioro S.p.A., 36033 Isola Vicentina VI (IT)
(72) Inventor: Marchioro, Domenico, 36033 Isola Vicentina Prov. of Vicenza (IT)
(74) Representative: Modiano, Micaela Nadia

(56) References cited:
- DE-C- 600 652
- GB-A- 1 348 875
- US-A- 2 031 874
- US-A- 3 654 904

## Description

The present invention relates to a waste-reducing food dispenser, particularly for cages for small animals.

Food dispensers that can be applied to cages, comprising a tray for food, accessed by small animals, such as for example canaries, directly from the cage in order to obtain food, are currently known.

This direct access of the small animals to said food-carrying tray is due to the fact that known food dispensers are structured so that said tray is arranged adjacent to the walls of the cage.

Moreover, said food dispensers have a rod-like supporting element for the small animals, which is associated with the tray so that said small animals can reach the food comfortably.

Food is replaced in said food-supporting trays substantially according to two methods.

A first method entails disengaging the entire food dispenser from the cage.

In a second method, top-up is performed through a flap that can be opened upward and is rigidly coupled to the food dispenser and to the tray, accordingly avoiding the disengagement of the food dispenser from the cage.

These food dispensers have a vast market in view of their constructive simplicity and their low cost. US-A-2 031 874, issued to L. Butler et al, discloses a waste-reducing food dispenser as defined in the preamble of appended claim 1.

Said food dispensers as described above, although known and commercially appreciated for several years, suffer from drawbacks.

A first drawback is that the food removed and not ingested by the animal that uses the dispenser is generally released inside the cage, mixing with the dirt that is present on the bottom of the cage.

In this manner, the food that has not been ingested cannot be recovered and indeed contributes to increase said dirt.

A second drawback is due to the fact that it is difficult to refill said food-carrying tray, either because it is necessary to remove the entire food dispenser from the cage or because refilling through the upward-opening flap is not handy to perform.

The aim of the present invention is to provide a waste-reducing food dispenser that allows to recover the food that is not ingested by the animals.

Within this aim, an object of the present invention is to provide a waste-reducing food dispenser that has a food-carrying tray that is easy to access and convenient to refill.

Another object of the present invention is to provide a waste-reducing food dispenser that has low constructive complexity and low production costs.

Another object of the present invention is to provide a waste-reducing food dispenser that is easy to maintain.

Another object of the present invention is to provide a waste-reducing food dispenser that can be manufactured with known technologies.

This aim and these and other objects that will become better apparent hereinafter are achieved by a waste-reducing food dispenser particularly for cages for small animals accoding to appended claim 1.

Advantageously, said waste-reducing food dispenser is characterized in that said box-like body comprises elements for extracting/inserting said food carrying tray.

Further characteristics and advantages of the present invention will become better apparent from the following detailed description of an embodiment thereof, illustrated by way of non-limiting example in the accompanying drawings, wherein:

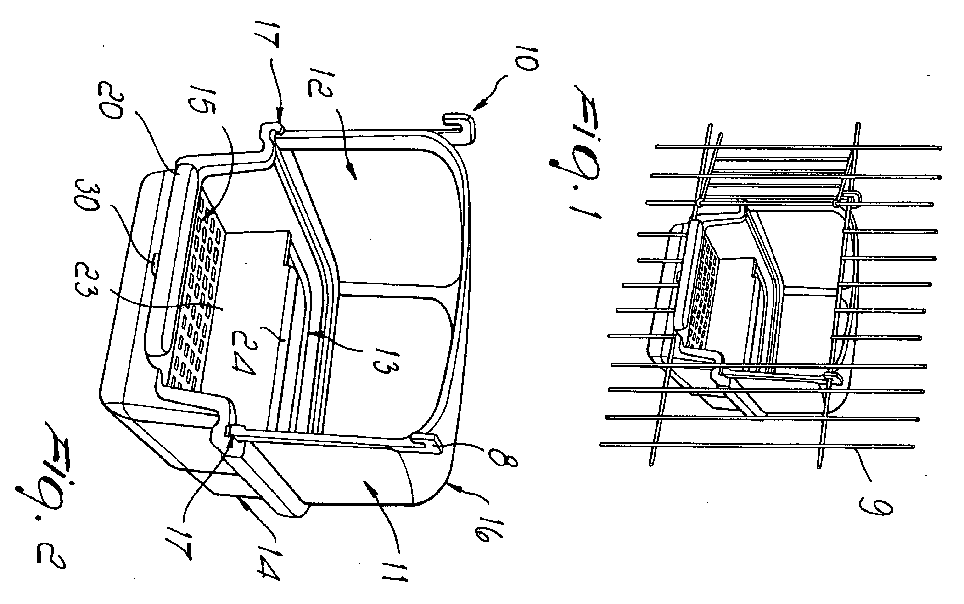

Figure 1 is a perspective view of the food dispenser according to the invention, associated with the appropriately provided opening of a cage;
Figure 2 is a front perspective view of the food dispenser according to the invention, shown separately;

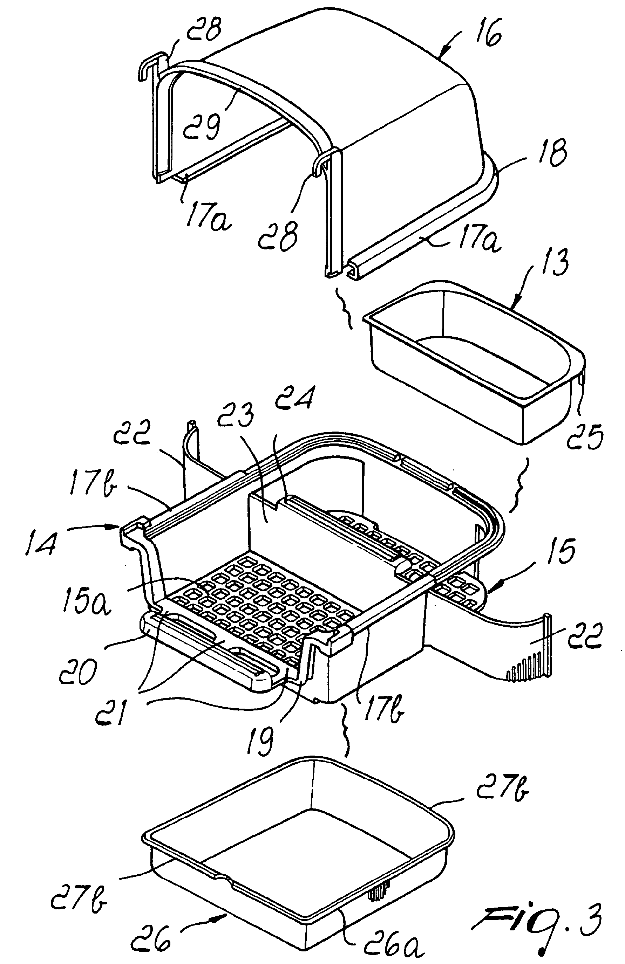

Figure 3 is a perspective view of the food dispenser according to the invention, shown exploded into its main components;

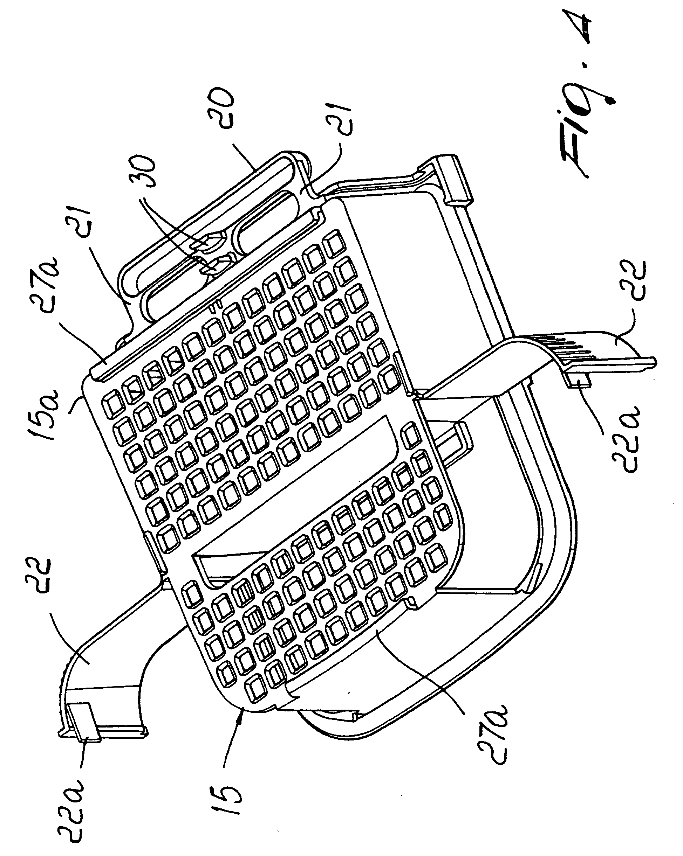

Figure 4 is a bottom perspective view of a portion of the food dispenser.

With reference to the figures, a waste-reducing food dispenser is generally designated by the reference numeral 10.

The waste-reducing food dispenser 10 comprises a box-like body 11, with an opening 12 at which fixing means 8 for fixing to the cage 9 are provided, and an internal food-carrying tray 13.

The box-like body 11 is composed of a central tray 14 with a grille-like base 15 and a cover 16, said base and said cover being joined by way of removable connecting means 17.

Such removable connecting means 17 are constituted by a first pair of mutually opposite guides 17a that have a C-shaped cross-section and are arranged on lateral perimetric portions of a lower rim 18 of the cover 16, and by corresponding upper rims 17b of the central tray 14, whose cross-section is complementary to the cross-section of the guides 17a.

The central tray 14 monolithically comprises, in addition to the already mentioned upper rims 17b and the grille-like base 15, on its front edge 19, a first rod-like element 20 that acts as a perch and is parallel to the front edge 19.

The first rod-like element 20 has a substantially trapezoidal cross-section and a grooved surface.

The first rod-like element 20 is associated with said front edge by means of bridge elements 21, which are also monolithic with the tray 14.

The central tray 14 further comprises two access elements for insertion/extraction with respect to the food-carrying tray 13, which are constituted by two rear lateral flaps or doors 22 provided with removable locking means.

Such removable locking means are constituted by two teeth 22a for engaging the tray 13, one for each flap or door 22.

Moreover, the central tray 14 is crossed from one side to the other by a transverse wall 23 proximate to the articulations of the rear lateral flaps 22.

The wall 23 has, on its upper edge, a second rod-like element 24 that acts as a perch and also has a substantially trapezoidal cross-section and a grooved surface.

The doors 22, the respective engagement teeth 22a, the second rod-like element 24 and the transverse wall 23 are monolithic with the central tray 14.

The wall 23 delimits a front portion 15a of the grille-like base 15 that is arranged offset with respect to the food carrying tray 13, adjacent to the opening 12 and forms, together with the wall of the tray 14 that lies opposite the opening 12 and together with the flaps 22, the back region where the food-carrying tray 13 is located.

Such food-carrying tray 13 comprises two grip elements for extracting it, which are constituted by two tooth-like protrusions 25 that are directed downward and are arranged angularly on the upper rim of the food-carrying tray 13.

A lower recovery tray 26 is rigidly coupled to the box-like body 11 and therefore in a lower region with respect to the base 15 of the tray 14, by way of removable coupling means 27 described in greater detail hereinafter.

The perimeter of the upper rim 26a of the recovery tray 26 mates with the perimeter of the lower rim of the box-like body 11 and therefore with the perimeter of the grille-like base 15 of the central tray 14.

The removable coupling means 27 are constituted by a second pair of mutually opposite guides 27a that have a C-shaped cross-section and are arranged on two perimetric parts of the lower face of the grille-like base 15.

The first of said perimetric parts is adjacent to the bridge elements 21 and the second perimetric part lies on the opposite side.

Moreover, the removable coupling means 27 are constituted by corresponding portions 27b of the upper rim 26a of the lower tray 26.

The portions 27b have a cross-section that is shaped complementarily to the cross-section of the guides 27a.

The means 8 for fixing the box-like body 11 to the cage 9 are constituted by first and second removable engagement means, respectively on the cover 13 and on the central tray 14.

The first removable engagement means are constituted by two lateral protrusions 28 that are shaped like a hook that is directed downward on the front edge 29 of the cover 16.

The second removable engagement means are constituted by a clamp-like connection 30 that is directed downward and is arranged below the central element of the bridge elements 21.

In practice it has been found that the invention thus described solves the problems noted in known types of food dispenser for cages for small animals.

In particular, the present invention provides a waste-reducing food dispenser in which the food that is not ingested by the small animals does not fall onto the bottom of the cage but collects, through the grille-like base 15, in the lower recovery tray 26.

The tray 26 can be extracted and therefore allows to recover the food that would otherwise be lost on the bottom of the cage.

Moreover, it is noted that the waste-reducing food dispenser according to the invention allows, through the flaps or doors 22, to extract/insert the food-carrying tray 13, making it easy to perform food refilling/replacement.

The invention thus conceived is susceptible of modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

## Claims

1. A waste-reducing food dispenser particularly for cages for small animals, comprising a box-like body (11) provided with an opening (12) at which fixing means (8) for fixing to the cage (9) are provided, an internal food-carrying tray (13), and a lower recovery tray (26) coupled, by way of removable coupling means (27), on said box-like body (11), said food dispenser being **characterized in that** at least one portion (15a) of the base (15) of said box-like body (11) is grille-like, said at least one portion (15a) not being arranged below said food-carrying tray (13) and said lower recovery tray (26) being arranged below said base (15), the dimensions of said recovery tray being sufficient to cover at least said grille-like portion (15a) of the base.

2. The waste-reducing food dispenser according to claim 1, **characterized in that** said at least one grille-like portion (15a) of the base (15) runs along the entire surface of said base (15).

3. The waste-reducing food dispenser according to claim 1, **characterized in that** the perimeter of the upper rim (26a) of said recovery tray (26) substantially mates with the perimeter of the lower rim of the box-like body (11).

4. The waste-reducing food dispenser according to claim 1, **characterized in that** said removable connecting means (27) are constituted by two mutually opposite guides (27a) that have a C-shaped cross-section and are arranged on front and rear perimetric parts of the lower face of said box-like body (11) and in corresponding portions (27b) of the upper edge (26a) of said recovery tray (26) that have a cross-section that is shaped complementarily to the cross-section of said guides (27a).

5. The waste-reducing food dispenser according to claim 1, **characterized in that** said box-like body (11) is composed of a central tray (14) with a grille-like base (15) and a cover (16) that is connected by way of removable connecting means (17).

6. The waste-reducing food dispenser according to claim 5, **characterized in that** said central tray (14) monolithically comprises said grille-like base (15).

7. The waste-reducing food dispenser according to one or more of the preceding claims, **characterized in that** said removable connecting means (17) are constituted by two guides (17a) that are mutually opposite and have a C-shaped cross-section on lateral perimetric portions of the lower rim (18) of said cover (16), and by corresponding upper rims (17b) of said central tray (14) whose shape is complementary to the cross-section of said guides (17a).

8. The waste-reducing food dispenser according to claim 1, **characterized in that** said means for fixing to the cage are constituted by first and second removable engagement means, respectively on said cover (16) and on said central tray (14).

9. The waste-reducing food dispenser according to claim 8, **characterized in that** said first removable engagement means are constituted by two lateral protrusions (28) that are hook-shaped and directed downward onto the front rim (29) of said cover (16).

10. The waste-reducing food dispenser according to claims 8 or 9, **characterized in that** said second removable engagement means are constituted by a clamp-like connection (30) that is directed downward and is arranged proximate to the lower rim of the opening (12).

11. The waste-reducing food dispenser according to one or more of the preceding claims, **characterized in that** it further comprises access elements (22) for inserting/extracting said food-carrying tray (13).

12. The waste-reducing food dispenser according to claim 11, **characterized in that** said food-carrying tray (13) is arranged opposite with respect to said opening (12) inside said box-like body (11).

13. The waste-reducing food dispenser according to claim 11, **characterized in that** said access elements are constituted by two rear lateral flaps (22) with which removable locking means are associated.

14. The waste-reducing food dispenser according to claims 11 to 13, **characterized in that** said removable locking means are constituted by two teeth (22a) for engaging the central tray (14), one tooth for each one of the rear lateral flaps (22).

15. The waste-reducing food dispenser according to claim 11, **characterized in that** said food-carrying tray (13) comprises at least one grip element for extraction.

16. The waste-reducing food dispenser according to claim 15, **characterized in that** said at least one grip element is constituted by two tooth-like protrusions (25) that are directed downward and are arranged angularly on the upper rim of said food-carrying tray (13).

17. The waste-reducing food dispenser according to claim 1, **characterized in that** said box-like body (11) comprises elements for insertion/extraction with respect to said food-carrying tray (13).

18. The waste-reducing food dispenser according to one or more of the preceding claims 5 or 6, **characterized in that** said central tray (14) comprises a transverse wall (23) proximate to the articulations of said rear lateral flaps (22).

19. The waste-reducing food dispenser according to claim 18, **characterized in that** said transverse wall (23) comprises a rod-like element (24) on its upper rim.

20. The waste-reducing food dispenser according to claim 19, **characterized in that** said rod-like element (24) has a substantially trapezoidal cross-section and a grooved surface.

21. The waste-reducing food dispenser according to claims 19 or 20, **characterized in that** said rod-like element (24) and said transverse wall (23) are monolithic with said central tray (14).

## Patentansprüche

1. Abfallreduzierender Futterspender, insbesondere für Kleintierkäfige, umfassend einen mit einer Öffnung (12) versehenen, kastenähnlichen Körper (11), an dem Befestigungsmittel (8) zum Befestigen an dem Käfig (9) vorgesehen sind, eine interne Futteraufnahmeschale (13) und eine untere Rückgewinnungsschale (26), welche mittels lösbarer Kopplungsmittel (27) an den kastenähnlichen Körper (11) gekoppelt ist, wobei der Futterspender **dadurch gekennzeichnet ist, dass** wenigstens ein Abschnitt (15a) der Basis (15) des kastenähnlichen Körpers (11) Grill-ähnlich ist und der wenigstens eine Abschnitt (15a) nicht unterhalb der Futteraufnahmeschale (13) angeordnet ist und die untere Rückgewinnungsschale (26) unterhalb der Basis (15) angeordnet ist, wobei die Abmessungen der Rückgewinnungsschale ausreichend sind, um wenigstens den Grill-ähnlichen Abschnitt (15a) der Basis zu bedecken.

2. Futterspender nach Anspruch 1, **dadurch gekennzeichnet, dass** wenigstens der Grill-ähnliche Abschnitt (15a) der Basis (15) die gesamte Oberfläche der Basis (15) einnimmt.

3. Futterspender nach Anspruch 1, **dadurch gekennzeichnet, dass** der Umfang des oberen Rands (26a) der Rückgewinnungsschale (26) im Wesentlichen mit dem Umfang des unteren Rands des kasten-ähnlichen Körpers (11) übereinstimmt.

4. Futterspender nach Anspruch 1, **dadurch gekennzeichnet, dass** die lösbaren Verbindungsmittel (27) durch zwei zueinander gegenüberliegende Führungen (27a) gebildet werden, welche einen C-förmigen Querschnitt aufweisen und die an vorderen und rückwärtigen umfänglichen Anteilen der unteren Fläche des kastenähnlichen Körpers (11) und in entsprechenden Abschnitten (27b) der unteren Kante (26a) der Rückgewinnungsschale (26), die einen Querschnitt aufweisen, der komplementär zu dem Querschnitt der Führungen (27a) geformt ist, angeordnet sind.

5. Futterspender nach Anspruch 1, **dadurch gekennzeichnet, dass** der kastenähnliche Körper (11) aus einer zentralen Schale (14) mit einer Grill-ähnlichen Basis (15) und einer Abdeckung (16) zusammengesetzt ist, welche mittels lösbarer Verbindungsmittel (17) verbunden sind.

6. Futterspender nach Anspruch 5, **dadurch gekennzeichnet, dass** die zentrale Schale (14) einstückig die Grill-ähnliche Basis (15) umfasst.

7. Futterspender nach zumindest einem der vorhergehenden Ansprüche, **dadurch gekennzeichnet, dass** die lösbaren Verbindungsmittel (17) durch zwei Führungen (17a), welche zueinander gegenüberliegend sind und einen C-förmigen Querschnitt auf seitlichen Umfangsabschnitten des unteren Rands (18) der Abdeckung (16) haben, und durch korrespondierende untere Ränder (17b) der zentralen Schale (14), deren Form komplementär zu dem Querschnitt der Führungen (17a) sind, gebildet werden.

8. Futterspender nach Anspruch 1, **dadurch gekennzeichnet, dass** die Mittel zum Befestigen am Käfig durch erste und zweite entfembare Eingriffsmittel, entsprechend an der Abdeckung (16) und an der zentralen Schale (14) gebildet werden.

9. Futterspender nach Anspruch 8, **dadurch gekennzeichnet, dass** die ersten lösbaren Eingriffsmittel durch zwei seitliche Vorsprünge (28) gebildet werden, welche hakenförmig und abwärts gerichtet auf dem vorderen Rand (29) der Abdeckung (16) angeordnet sind.

10. Futterspender nach Anspruch 8 oder 9, **dadurch gekennzeichnet, dass** die zweiten lösbaren Eingriffsmittel durch eine klemmenähnliche Verbindung (30) gebildet werden, welche abwärts gerichtet ist und die benachbart zu dem unteren Rand der Öffnung (12) angeordnet ist.

11. Futterspender nach zumindest einem der vorhergehenden Ansprüche, **dadurch gekennzeichnet, dass** er weiterhin Zugangselemente (22) zum Einführen/Entnehmen der Futteraufnahmeschale (13) aufweist.

12. Futterspender nach Anspruch 11, **dadurch gekennzeichnet, dass** die Futteraufnahmeschale (13) gegenüberliegend in Bezug auf die Öffnung (12) innerhalb des kastenähnlichen Körpers (11) angeordnet ist.

13. Futterspender nach Anspruch 11, **dadurch gekennzeichnet, dass** die Zugangselemente durch zwei rückwärtige, seitliche Klappen (22) gebildet werden, mit denen lösbare Verriegelungsmittel zusammenwirkend sind.

14. Futterspender nach den Ansprüchen 11-13, **dadurch gekennzeichnet, dass** die lösbaren Verriegelungsmittel durch zwei Zähne (22a) zum Eingreifen an der zentralen Schale (14) gebildet werden, ein Zahn für jede der rückwärtigen seitlichen Klappen (22).

15. Futterspender nach Anspruch 11, **dadurch gekennzeichnet, dass** die Futteraufnahmeschale (13) wenigstens ein Griffelement zur Entnahme umfasst.

16. Futterspender nach Anspruch 15, **dadurch gekennzeichnet, dass** das wenigstens eine Griffelement durch zwei zahnähnliche Vorsprünge (25) gebildet wird, welche abwärts gerichtet sind und abgewinkelt auf dem unteren Rand der Futteraufnahmeschale (13) angeordnet sind.

17. Futterspender nach Anspruch 1, **dadurch gekennzeichnet, dass** der kastenähnliche Körper (11) Elemente zum Einführen/Entnehmen in Bezug auf die Futteraufnahmeschale (13) umfasst.

18. Futterspender nach zumindest einem der vorhergehenden Ansprüche 5 oder 6, **dadurch gekennzeichnet, dass** die zentrale Schale (14) eine Querwand (23) benachbart zu den Gelenken der rückwärtigen, seitlichen Klappen (22) umfasst.

19. Futterspender nach Anspruch 18, **dadurch gekennzeichnet, dass** die Querwand (23) ein Stab-ähnliches Element (24) auf ihrem oberen Rand umfasst.

20. Futterspender nach Anspruch 19, **dadurch gekennzeichnet, dass** das Stab-ähnliche Element (24) einen im Wesentlichen trapezförmigen Querschnitt und eine genutete Oberfläche aufweist.

21. Futterspender nach Anspruch 19 oder 20, **dadurch gekennzeichnet, dass** das Stab-ähnliche Element (24) und die Querwand (23) einstückig mit der zentralen Schale (14) sind.

## Revendications

1. Distributeur alimentaire réduisant les déchets, particulièrement pour des cages de petits animaux, comprenant un corps semblable à une boîte (11) pourvu d'une ouverture (12) à laquelle sont prévus des moyens de fixation (8) pour la fixation à la cage (9), un plateau interne porte-aliments (13), et un plateau inférieur de récupération (26), couplé à l'aide de moyens de couplage amovibles (27) sur ledit corps semblable à une boîte (11), ledit distributeur alimentaire étant **caractérisé en ce qu'**au moins une portion (15a) de la base (15) dudit corps semblable à une boîte (11) ressemble à une grille, ladite au moins une portion (15a) n'étant pas agencée au-dessous dudit plateau porte-aliments (13) et ledit plateau de récupération inférieur (26) étant agencé au-dessous de ladite base (15), les dimensions dudit plateau de récupération étant suffisantes pour couvrir au moins ladite portion semblable à une grille (15a) de la base.

2. Distributeur alimentaire réduisant les déchets, selon la revendication 1, **caractérisé en ce que** ladite au moins une portion semblable à une grille (15a) de la base (15) s'étend le long de la surface entière de ladite base (15).

3. Distributeur alimentaire réduisant les déchets, selon la revendication 1, **caractérisé en ce que** le périmètre du rebord supérieur (26a) dudit plateau de récupération (26) est sensiblement apparié au périmètre du rebord inférieur du corps semblable à une boîte (11).

4. Distributeur alimentaire réduisant les déchets, selon la revendication 1, **caractérisé en ce que** lesdits moyens de connexion amovibles (27) sont constitués par deux guides mutuellement opposés (27a) qui ont une section transversale en forme de C et qui sont agencés sur les parties périmétriques antérieure et postérieure de la face inférieure dudit corps semblable à une boîte (11) et dans des portions correspondantes (27b) du bord supérieur (26a) dudit plateau de récupération (26) qui ont une section transversale de forme complémentaire à la section transversale desdits guides (27a).

5. Distributeur alimentaire réduisant les déchets, selon la revendication 1, **caractérisé en ce que** ledit corps semblable à une boîte (11) est composé d'un plateau central (14) avec une base semblable à une grille (15) et un couvercle (16) qui est connecté à l'aide de moyens de connexion amovibles (17).

6. Distributeur alimentaire réduisant les déchets, selon la revendication 5, **caractérisé en ce que** ledit plateau central (14) comprend ladite base semblable à une grille (15) de façon monolithique.

7. Distributeur alimentaire réduisant les déchets, selon l'une ou plusieurs des revendications précédentes, **caractérisé en ce que** lesdits moyens de connexion amovibles (17) sont constitués par deux guides (17a) qui sont mutuellement opposés et qui ont une section transversale en forme de C sur des portions périmétriques latérales du rebord inférieur (18) dudit couvercle (16), et par deux rebords supérieurs correspondants (17b) dudit plateau central (14) dont la forme est complémentaire à la section transversale desdits guides (17a).

8. Distributeur alimentaire réduisant les déchets, selon la revendication 1, **caractérisé en ce que** lesdits moyens pour la fixation à la cage sont constitués par des premiers et des seconds moyens d'engagement amovibles, respectivement sur ledit couvercle (16) et sur ledit plateau central (14).

9. Distributeur alimentaire réduisant les déchets, selon la revendication 8, **caractérisé en ce que** lesdits premiers moyens d'engagement amovibles sont constitués par deux projections latérales (28) qui sont en forme de crochets et qui sont dirigées vers le bas et jusque sur le rebord frontal (29) dudit couvercle (16).

10. Distributeur alimentaire réduisant les déchets, selon les revendications 8 ou 9, **caractérisé en ce que** lesdits seconds moyens d'engagement amovibles sont constitués par une connexion semblable à une pince (30) qui est dirigée vers le bas et qui est agencée à proximité du rebord inférieur de l'ouverture (12).

11. Distributeur alimentaire réduisant les déchets, selon l'une ou plusieurs des revendications précédentes, **caractérisé en ce qu'**il comprend en outre des éléments d'accès (22) pour insérer/extraire ledit plateau porte-aliments (13).

12. Distributeur alimentaire réduisant les déchets, selon la revendication 11, **caractérisé en ce que** ledit plateau porte-aliments (13) est agencé à l'opposé par rapport à ladite ouverture (12) à l'intérieur dudit corps semblable à une boîte (11).

13. Distributeur alimentaire réduisant les déchets, selon la revendication 11, **caractérisé en ce que** lesdits éléments d'accès sont constitués par deux volets latéraux postérieurs (22), auquel sont associés des moyens de blocage amovibles.

14. Distributeur alimentaire réduisant les déchets selon les revendications 11 à 13, **caractérisé en ce que** lesdits moyens de blocage amovibles sont constitués par deux dents (22a) pour engager le plateau central (14), une dent pour chacun des volets latéraux postérieurs (22).

15. Distributeur alimentaire réduisant les déchets selon la revendication 11, **caractérisé en ce que** ledit plateau porte-aliments (13) comprend au moins un élément de préhension pour l'extraction.

16. Distributeur alimentaire réduisant les déchets selon la revendication 15, **caractérisé en ce que** ledit au moins un élément de préhension est constitué par deux projections semblables à des dents (25) qui sont dirigées vers le bas et qui sont agencées sous un angle sur le rebord supérieur dudit plateau porte-aliments (13).

17. Distributeur alimentaire réduisant les déchets, selon la revendication 1, **caractérisé en ce que** ledit corps semblable à une boîte (11) comprend des éléments pour l'insertion/extraction par rapport audit plateau porte-aliments (13).

18. Distributeur alimentaire réduisant les déchets, selon l'une ou plusieurs des revendications précédentes 5 ou 6, **caractérisé en ce que** ledit plateau central (14) comprend une paroi transversale (23) à proximité des articulations desdits volets latéraux postérieurs (22).

19. Distributeur alimentaire réduisant les déchets, selon la revendication 18, **caractérisé en ce que** ladite paroi transversale (23) comprend un élément semblable à une barre (24) sur son rebord supérieur.

20. Distributeur alimentaire réduisant les déchets, selon la revendication 19, **caractérisé en ce que** ledit élément semblable à une barre (24) a une section transversale sensiblement trapézoïdale et une surface rainurée.

21. Distributeur alimentaire réduisant les déchets, selon les revendications 19 ou 20, **caractérisé en ce que** ledit élément semblable à une barre (24) et ladite paroi transversale (23) sont monolithiques avec ledit plateau central (14).
